# EUROPEAN PATENT SPECIFICATION

(11) **EP 1 674 682 B1**
(45) Date of publication and mention of the grant of the patent: **18.04.2007**
(21) Application number: 05027529.6
(22) Date of filing: 15.12.2005
(51) Int. Cl.: F01N 3/08, F02D 41/02

(54) **Exhaust gas purifying apparatus for internal combustion engine**
Abgasreinigungsvorrichtung für eine Brennkraftmaschine
Dispositif de purification des gaz d'échappement pour un moteur à combustion interne

(30) Priority: 27.12.2004 JP 2004375164
(43) Date of publication of application: 28.06.2006
(73) Proprietor: HONDA MOTOR CO., Ltd., Tokyo (JP)
(72) Inventor: Morita, Tomoko, Wako-shi Saitama (JP); Wada, Katsuji, Wako-shi Saitama (JP); Suzuki, Norio, Wako-shi Saitama (JP)
(74) Representative: Prechtel, Jörg

(56) References cited:
- EP-A- 0 723 805
- EP-A- 0 878 609
- EP-A- 1 213 460
- PATENT ABSTRACTS OF JAPAN vol. 2000, no. 22, 9 March 2001 (2001-03-09) & JP 2001 140630 A (HITACHI LTD; HITACHI CAR ENG CO LTD), 22 May 2001 (2001-05-22)

## Description

### BACKGROUND OF THE INVENTION

### Field of the Invention

The present invention relates to an exhaust gas purifying apparatus for an internal combustion engine, and particularly, to an exhaust gas purifying apparatus including a NOx removing device for removing NOx from the exhaust gases.

### Description of the Related Art

A lean NOx catalyst absorbs NOx in exhaust gases when the exhaust gases are in an oxidizing state. In an oxidizing state, the concentration of oxygen in the exhaust gases is relatively high compared with the concentration of reducing components (HC, CO). The lean NOx catalyst also reduces absorbed NOx when the exhaust gases are in a reducing state. In a reducing state, the concentration of reducing components in the exhaust gases is relatively high compared with the concentration of oxygen.

Japanese Patent Laid-open No. 2001-140630 discloses an exhaust gas purifying apparatus, including an ammonia generating catalyst and a NOx removing catalyst. The ammonia generating catalyst generates ammonia when the exhaust gases are in the reducing state. The NOx removing catalyst reduces NOx using the ammonia generated by the ammonia generating catalyst as a reducing agent. The above-described lean NOx catalyst is an example of the NOx removing catalyst in the exhaust gas purifying apparatus. In the exhaust gas purifying apparatus of Japanese Patent Laid-open No. 2001-140630, the stoichiometric-rich operation and the lean operation are performed alternately to increase the time period in which ammonia and NOx coexist, thereby removing NOx. In the stoichiometric-rich operation, the air-fuel ratio is set to a value on the rich side with respect to the stoichiometric ratio or a value equal to the stoichiometric ratio. In the lean burn operation, the air-fuel ratio is set to a value on the lean side with respect to the stoichiometric ratio.

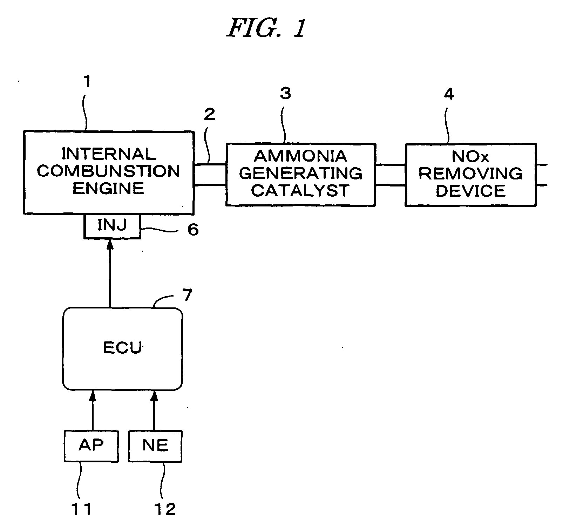

Document EP-A-0723805 shows a device for resolving NOx components in an exhaust gas of an internal combustion engine comprising: an NH3 synthesizing catalyst (3) disposed on an exhaust gas passage of the engine, wherein said NH3 synthesizing catalyst converts NOx components in the exhaust gas discharged from the engine when the operating air-fuel ratio of the engine is lower than the stoichiometric air-fuel ratio to NH3 and N2 components and an NH3 decomposing catalyst (7) disposed on the exhaust gas passage downstream of the NH3 synthesizing catalyst, wherein said NH3 decomposing catalyst absorbs NOx components in the exhaust gas discharged from the engine and pass through the NH3 synthesizing catalyst when the operating air-fuel ratio of the engine is higher than the stoichiometric air-fuel ratio and wherein said NH3 decomposing catalyst reduces the absorbed NOx components by reacting said NOx components with the NH3 component produced by the NH3 synthesizing catalyst when the engine operating air-fuel ratio is lower than the stoichiometric air-fuel ratio (see figure 1).

In the above-described conventional exhaust gas purifying apparatus, the time period of the stoichiometric-rich operation becomes relatively large in order to generate a sufficient amount of ammonia for reducing NOx, resulting in increased fuel consumption.

### SUMMARY OF THE INVENTION

The present invention provides an exhaust gas purifying apparatus which reduces the time period in which exhaust gases are in the reducing state by effectively performing ammonia generation and NOx reduction to suppress deterioration of the fuel consumption rate.

The present invention is achieved by providing an exhaust gas purifying apparatus for an internal combustion engine, including an ammonia generating device (3) provided in an exhaust system of the engine and a NOx removing device (4) provided downstream of the ammonia generating device (3). The ammonia generating device generates ammonia by a reaction of NOx and reducing components in exhaust gases when the exhaust gases are in a reducing state. The NOx removing device adsorbs NOx in the exhaust gases when the exhaust gases are in an oxidizing state, reduces the adsorbed NOx to generate ammonia, and retains the generated ammonia when the exhaust gases are in the reducing state.

With this configuration, NOx in the exhaust gases is adsorbed by the NOx removing device when the exhaust gases are in the oxidizing state. When the exhaust gases are in the reducing state, the ammonia generated by the ammonia generating device and the NOx removing device reduces NOx adsorbed by the NOx removing device, and a part of the generated ammonia is retained by the NOx removing device. Further, the retained ammonia is used to reduce NOx when the exhaust gases enter the oxidizing state. Therefore, the present invention eliminates the need to alternately perform a lean burn operation, wherein the exhaust gases are in the oxidizing state, and a rich operation wherein the exhaust gases are in the reducing state, such as in a conventional system. NOx removal capability can be maintained by continuing the lean burn operation until the amount of exhausted NOx exceeds the maximum amount of NOx that the NOx removing device can adsorb, and, thereafter, performing the rich operation or supplying reducing components to the exhaust system for a short period of time. That is, the ammonia generating capacity of the ammonia generating device and the ammonia-retaining capacity of the NOx removing device are fully used. As such, the generation of ammonia and the reduction of NOx can be performed efficiently, suppressing deterioration of the fuel consumption rate.

In the ammonia generating device, the ammonia generating capacity is high when the temperature thereof is comparatively high. In the NOx removing device, the ammonia-retaining capacity is high when the temperature thereof is comparatively low. Therefore, arranging the NOx removing device downstream of the ammonia generating device effectively contributes to efficiently generating and retaining ammonia. Consequently, the reduction of NOx by ammonia can be promoted.

In one embodiment of the present invention, the exhaust gas purifying apparatus further includes a reducing components supply device for supplying reducing components to an upstream side of the ammonia generating device. With this configuration, reducing components are supplied to the ammonia generating device, thereby promoting reduction of NOx and generation of ammonia.

In an embodiment of the present invention, the reducing components supply device supplies reducing components by enriching an air-fuel ratio of an air-fuel mixture in a combustion chamber of the engine.

In an embodiment of the present invention, the ammonia generating device comprises a heat-resistant porous carrier and one or more of precious metals such as palladium (Pd), platinum (Pt), rhodium (Rh), ruthenium (Ru), and iridium (Ir) carried by the carrier.

### BRIEF DESCRIPTION OF THE DRAWINGS

FIG. 1 is a diagram illustrating a configuration of an internal combustion engine and an exhaust gas purifying apparatus therefor according to one embodiment of the present invention;

FIGs. 2A-2C illustrate the NOx removing device illustrated in FIG. 1;

FIG. 3 is a graph illustrating an effect of disposing an ammonia-generating catalyst upstream of the NOx removing device; and

FIG. 4 is a graph illustrating another effect of disposing an ammonia-generating catalyst upstream of the NOx removing device.

### DETAILED DESCRIPTION OF THE PREFERRED EMBODIMENTS

Preferred embodiments of the present invention will now be described with reference to the drawings.

FIG. 1 is a diagram illustrating a configuration of an internal combustion engine (hereinafter referred to as "engine") and an exhaust gas purifying apparatus of the engine according to one embodiment of the present invention. The engine 1 can be a diesel engine in which fuel is directly injected into cylinders, and each cylinder is provided with a fuel injection valve 6. The fuel injection valve 6 is electrically connected to an electronic control unit 7 (hereinafter referred to as "ECU"). A valve opening timing and a valve opening period of the fuel injection valve 6 are controlled by the ECU 7.

An exhaust pipe 2 of the engine 1 is provided with a NOx removing device 4. An ammonia generating catalyst 3 is provided upstream of the NOx removing device 4. The ammonia generating catalyst 3 reduces nitrogen dioxide (NO₂) to generate nitrogen (N₂), and ammonia (NH₃) by the chemical reaction expressed by the following chemical equations (1) and (2), when the exhaust gases are in the reducing state.

2NO₂ + 4H₂→ N₂ + 4H₂O (1)

2NO₂ + 7H₂ → 2NH₃ + 4H₂O (2)

The ammonia generating catalyst 3 comprises a heat-resistant porous carrier and one or more of precious metals such as palladium (Pd), platinum (Pt), rhodium (Rh), ruthenium (Ru), and iridium (Ir) carried by the carrier.

The NOx removing device 4 includes platinum (Pt) as a catalyst, ceria having NOx adsorbing capacity, and zeolite for retaining ammonia (NH₃) in the exhaust gases as ammonium ion (NH₄⁺). The platinum is carried by an alumina (Al₂O₃) carrier.

When the amount of NOx adsorbed by the NOx removing device 4 reaches the limit of its NOx adsorbing capacity, i.e., the maximum NOx adsorbing amount, the NOx removing device 4 cannot adsorb additional NOx. Accordingly, to timely reduce the adsorbed NOx, reducing components are supplied to the NOx removing device 4. In this embodiment, reducing components can be supplied by setting an air-fuel ratio of an air-fuel mixture in the combustion chamber on a rich side with respect to the stoichiometric ratio, in increments of an amount of fuel injected from the fuel injection valve 6, and reducing an intake air amount using a throttle valve (not shown). That is, reducing components can be supplied by enriching the air-fuel ratio. By enriching the air-fuel ratio, a concentration of reducing components in the exhaust gases which flow into the NOx removing device 4 becomes higher than a concentration of oxygen, and reducing components can be supplied to the NOx removing device 4.

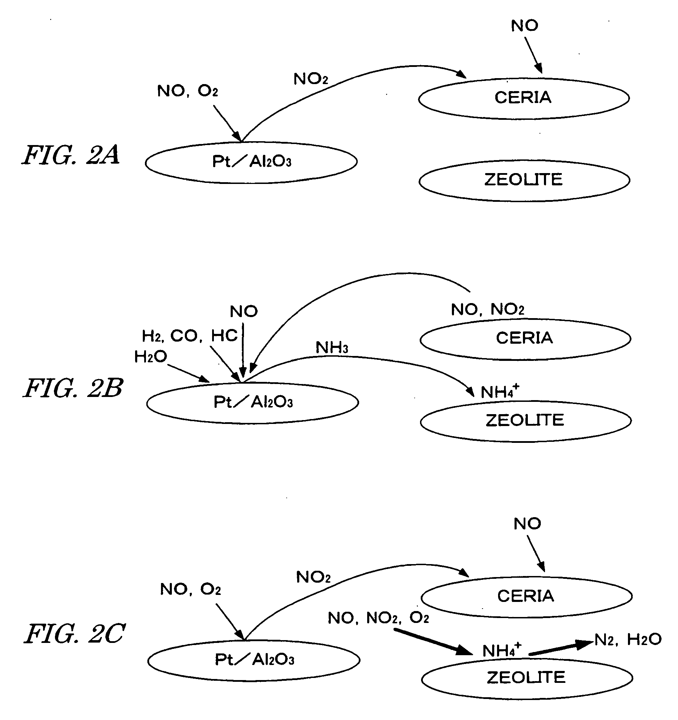

FIGs. 2A-2C illustrate the NOx removal in the NOx removing device 4. First, in the initial condition, when the air-fuel ratio of the air-fuel mixture that burns in the engine 1 is set to a value on the lean side with respect to the stoichiometric ratio, (i.e., when the lean burn operation is performed), the concentration of reducing components in the exhaust gases that flow into the NOx removing device 4 becomes lower than the concentration of oxygen. That is, the exhaust gases enter the oxidizing state. In this state, nitric oxide (NO) and oxygen (O₂) in the exhaust gases react by the action of the catalyst to be adsorbed by the ceria as nitrogen dioxide (NO₂), as shown in FIG. 2A. Further, the nitric oxide, which has not reacted with oxygen, is also adsorbed by the ceria.

Next, when the concentration of reducing components in the exhaust gases is made higher than the concentration of oxygen by enriching the air-fuel ratio, the exhaust gases enter the reducing state. Then, hydrogen and carbon monoxide are generated by the steam reforming reaction shown by the following equation (3). Further, carbon dioxide and hydrogen are generated from carbon monoxide and water by the water gas reaction expressed by the following equation (4).

CₙHₘ + nH₂O → nCO + (n+m/2)H₂ (3)

CO + H₂O → CO₂ + H₂ (4)

Further, as shown in FIG. 2B, NOx contained in the exhaust gases and NOx (NO, NO₂) adsorbed by the ceria and platinum react, by the action of the catalyst, with the hydrogen generated in the reforming catalyst 3 and the hydrogen generated in the NOx removing device 4 to generate ammonia (NH₃) and water. These reactions are expressed by the following chemical equations (5) and (6).

2NO₂ + 7H₂ → 2NH₃ + 4H₂O (5)

2NO + 5H₂ → 2 NH₃ + 2H₂O (6)

The generated ammonia is adsorbed by the zeolite in the form of an ammonium ion (NH₄⁺).

Next, when the air-fuel ratio is set to a value on the lean side with respect to the stoichiometric ratio to perform the lean burn operation, and the concentration of reducing components in the exhaust gases which flow into the NOx removing device 4 is set to a value on the lower side of the concentration of oxygen, the exhaust gases enter the oxidizing state. Then, NOx is adsorbed by the ceria as shown in FIG. 2C, similar to FIG. 2A. Further, when ammonium ions are adsorbed by the zeolite, NOx and oxygen in the exhaust gases react with ammonia to generate nitrogen (N₂) as expressed by the following equations (7) and (8).

4NH₃ + 4NO + O₂ → 4N₂ + 6H₂O (7)

2NH₃ + NO + NO₂ → 2N₂ + 3H₂O (8)

As described above, in the NOx removing device 4, the ammonia generated when supplying reducing components is adsorbed by the zeolite, and the adsorbed ammonia reacts with NOx during the lean burn operation. Accordingly, NOx can be efficiently removed.

An accelerator sensor 11 for detecting an operation amount AP of an accelerator pedal of the vehicle driven by the engine 1 (hereinafter referred to as "accelerator operation amount AP") and an engine rotational speed sensor 12 for detecting an engine rotational speed NE are connected to the ECU 7. The detection signals of these sensors are supplied to the ECU 7.

The ECU 7 calculates a fuel injection period, which is a valve opening period of the fuel injection valve 6, and an execution timing of the fuel injection according to the detection signals of these sensors. Further, the ECU 7 performs a drive control of the fuel injection valve 6 according to the calculation result. Specifically, an amount of NOx adsorbed by the NOx removing device 4 is estimated, and enrichment of the air-fuel ratio for making the exhaust gases enter the reducing state is performed when the estimated amount of adsorbed NOx reaches a predetermined threshold value.

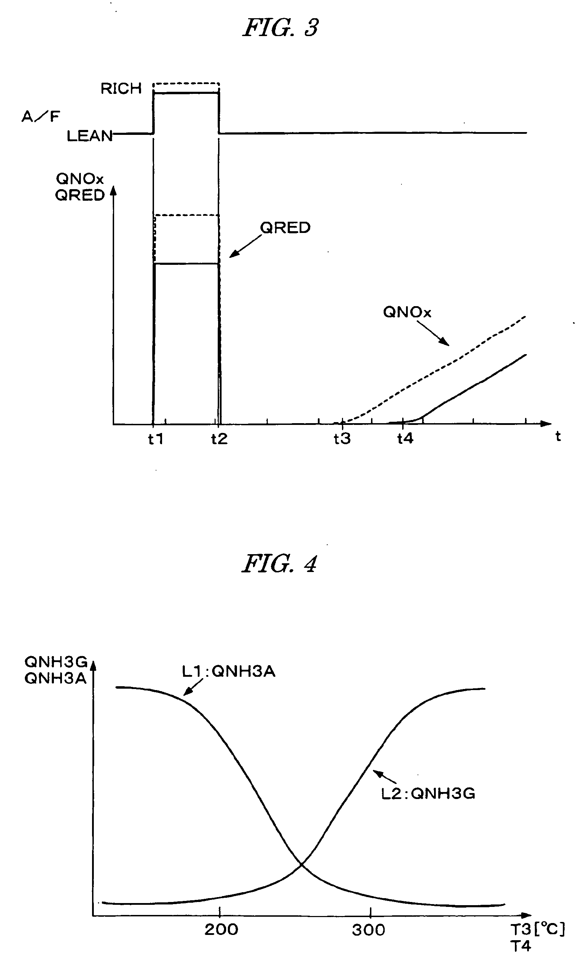

FIG. 3 is a time graph illustrating the relationship between the air-fuel ratio control, a reducing-component amount QRED, and a NOx amount QNOx in exhaust gases. In FIG. 3, the solid line corresponds to this embodiment, and the dashed line corresponds to an example where the ammonia generating catalyst 3 is not provided. Further, the reducing-component amount QRED indicates an amount of reducing components emitted from the engine 1, for example, an amount of reducing components which flow into the ammonia generating catalyst 3. The NOx amount QNOx indicates an amount of NOx emitted to the downstream side of the NOx removing device 4, specifically, a NOx amount after the amount of NOx adsorbed in the NOx removing device 4 has become saturated.

Normally, the air-fuel ratio is set to a value on the lean side with respect to the stoichiometric ratio to perform the lean burn operation. An enrichment of the air-fuel ratio is started from the time t1 when the estimated amount of adsorbed NOx reaches a predetermined threshold value. The enrichment ends at time t2. At this time, the reducing-component amount QRED rapidly increases and the exhaust gases enter the reducing state. In this embodiment, since ammonia is generated by the ammonia generating catalyst 3 and supplied to the NOx removing device 4, the degree of the enrichment can be made smaller to reduce the reducing-component amount QRED, compared with an exhaust gas purifying apparatus where the ammonia generating catalyst 3 is not provided. Further, the amount of ammonia retained by the NOx removing device 4 in the reducing state is increased by the ammonia generated by the ammonia generating catalyst 3, and the amount of NOx reduced during the lean burn operation increases. Therefore, the time the amount of NOx adsorbed by the NOx removing device 4 has become saturated is delayed from time t3 to time t4, thereby making it possible to lower the execution frequency of enrichment of the air-fuel ratio for reducing NOx.

In FIG. 4, the curve L1 shows a relationship between a temperature T4 of the NOx removing device 4 and an amount QNH3A of adsorbed ammonia. The curve L2 shows a relationship between a temperature T3 of the ammonia-generating catalyst 3 and an amount QNH3G of generated ammonia. As shown in this figure, while adsorption of ammonia in the NOx removing device 4 is promoted in a low-temperature region, where temperatures are equal to or less than 230 degrees C, generation of ammonia in the ammonia generating catalyst 3 is promoted in a high-temperature region where temperatures are equal to or higher than 270 degrees C.

Accordingly, by providing the ammonia generating catalyst 3 upstream of the NOx removing device 4, the temperature T3 of the ammonia generating catalyst 3 can be made comparatively high and the temperature T4 of the NOx removing device 4 can be made comparatively low. Therefore, by taking advantage of both characteristics of the ammonia generating catalyst 3 and the NOx removing device 4, efficient generation and adsorption (storage) of ammonia can be performed. More preferably, the ammonia generating catalyst 3 may be disposed at a position where the temperature T3 is 300 degrees C or more, and the NOx removing device 4 may be disposed at a position where the temperature T4 is 200 degrees C or more.

As described above, since the ammonia generating catalyst 3 is disposed upstream of the NOx removing device 4, which has ammonia-retaining capacity, ammonia is supplied from the ammonia generating catalyst 3 to the NOx removing device 4. As a result, the amount of ammonia retained in the NOx removing device 4 is increased when the exhaust gases are in the reducing state.

At the same time, a degree of the air-fuel ratio enrichment can be made smaller compared with the conventional apparatus. Further, since the amount of generated and retained ammonia increases, the amount of NOx reduced by ammonia during the lean burn operation increases, thereby reducing execution frequency of the air-fuel ratio enrichment for reducing NOx adsorbed by the NOx removing device 4. Consequently, the fuel consumption rate can be improved compared with the conventional apparatus.

In one embodiment of the present invention, the NOx removing device 4 corresponds to the NOx removing means, and the ammonia generating catalyst 3 corresponds to the ammonia generating means. Further, the fuel injection valve 6 and the ECU 7 comprise the reducing components supply means. Specifically, increasing the fuel injection amount by the air-fuel ratio enrichment corresponds to supplying reducing components.

The present invention is not limited to the above-described embodiment, and various modifications may be made. For example, in the above-described embodiment, the supply of reducing components is performed by increasing an amount of the main fuel injection, wherein one main injection per cylinder is performed by the fuel injection valve 6. Alternatively, the supply of reducing components may be performed by executing one or more post injections, wherein a supplemental fuel injection is executed after the main injection. Alternatively, a mechanism for directly supplying fuel to the exhaust pipe 2 may be provided as the reducing components supply means.

Further, in the above-described embodiment, ceria can be used as a NOx adsorbent. Alternatively, other materials which adsorb or absorb NOx may be used instead of ceria.

Further, in the above-described embodiment, there is shown an example where the present invention is applied to the exhaust gas purification of the diesel internal combustion engine. The present invention may be applied to the exhaust gas purification of a gasoline internal combustion engine. Further, the present invention can also be applied to the exhaust gas purification of a watercraft propulsion engine, such as an outboard engine having a vertically extending crankshaft.

The present invention may be embodied in other specific forms without departing from the spirit or essential characteristics thereof. The presently disclosed embodiments are therefore to be considered in all respects as illustrative and not restrictive, the scope of the invention being indicated by the appended claims, rather than the foregoing description, and all changes which come within the meaning and range of equivalency of the claims are, therefore, to be embraced therein.

## Claims

1. An exhaust gas purifying apparatus for an internal combustion engine (1), comprising:
ammonia generating means (3), provided in an exhaust system (2) of said engine (1), for generating ammonia by a reaction of NOx and reducing components in exhaust gases when the exhaust gases are in a reducing state; and
NOx removing means (4), provided downstream of said ammonia-generating means (3), for adsorbing NOx in the exhaust gases when the exhaust gases are in an oxidizing state, **characterized in that** said NOx removing means (4) reducing the adsorbed NOx to generate ammonia and retaining the generated ammonia when the exhaust gases are in the reducing state.

2. The exhaust gas purifying apparatus according to claim 1, further comprising reducing components supply means (6) for supplying reducing components to an upstream side of said ammonia generating means.

3. The exhaust gas purifying apparatus according to claim 2, wherein said reducing components supply means (6) supplies reducing components by enriching an air-fuel ratio of air-fuel mixture in a combustion chamber of said engine.

4. The exhaust gas purifying apparatus according to claim 1, wherein said ammonia generating means (3) comprises a heat-resistant porous carrier and one or more of precious metals such as palladium (Pd), platinum (Pt), rhodium (Rh), ruthenium (Ru), and iridium (Ir) carried by said carrier.

## Patentansprüche

1. Abgasreinigungsvorrichtung für eine Brennkraftmaschine (1), umfassend:
Ammoniakerzeugungsmittel (3), welche in einem Abgassystem (2) der Maschine (1) vorgesehen sind, um durch eine Reaktion von NOx und reduzierenden Komponenten in Abgasen Ammoniak zu erzeugen, wenn sich die Abgase in einem Reduktionszustand befinden; und
NOx-Entfernungsmittel (4), welche stromabwärts der Ammoniakerzeugungsmittel (3) vorgesehen sind, zum Adsorbieren von NOx in den Abgasen, wenn sich die Abgase in einem Oxidationszustand befinden,
**dadurch gekennzeichnet, dass** die NOx-Entfernungsmittel (4) das adsorbierte NOx reduzieren, um Ammoniak zu erzeugen, und das erzeugte Ammoniak speichern, wenn sich die Abgase in dem Reduktionszustand befinden.

2. Abgasreinigungsvorrichtung nach Anspruch 1, ferner umfassend Reduktionskomponenten-Zuführungsmittel (6) zum Zuführen von Reduktionskomponenten zu einer stromaufwärtigen Seite der Ammoniakerzeugungsmittel.

3. Abgasreinigungvorrichtung nach Anspruch 2, in welcher die Reduktionskomponenten-Zuführungsmittel (6) Reduktionskomponenten durch Anreichern eines Luft-Kraftstoff-Verhältnisses eines Luft-Kraftstoff-Gemischs in einer Verbrennungskammer der Maschine zuführen.

4. Abgasreinigungsvorrichtung nach Anspruch 1, in welcher die Ammoniakerzeugungsmittel (3) einen wärmebeständigen porösen Träger und ein oder mehrere durch den Träger getragene Edelmetalle, wie etwa Palladium (Pd), Platin (Pt), Rhodium (Rh), Ruthenium (Ru) und Iridium (Ir), aufweisen.

## Revendications

1. Appareil de purification des gaz d'échappement pour un moteur à combustion interne (1), comprenant :
un moyen (3) générant de l'ammoniac, fourni dans un système d'échappement (2) dudit moteur (1), pour générer de l'ammoniac par une réaction de NOₓ et des constituants réducteurs dans les gaz d'échappement lorsque les gaz d'échappement sont dans un état réducteur ; et
un moyen (4) éliminant NOₓ, fourni en aval dudit moyen (3) générant de l'ammoniac, pour adsorber NOₓ dans les gaz d'échappement lorsque les gaz d'échappement sont dans un état oxydant, **caractérisé en ce que** ledit moyen (4) éliminant NOₓ réduit les NOₓ adsorbés pour générer de l'ammoniac et retient l'ammoniac généré lorsque les gaz d'échappement sont dans un état réducteur.

2. Appareil de purification des gaz d'échappement selon la revendication 1, comprenant en outre un moyen (6) d'alimentation en constituants réducteurs pour alimenter des constituants réducteurs à un côté amont dudit moyen générant de l'ammoniac.

3. Appareil de purification des gaz d'échappement selon la revendication 2, dans lequel ledit moyen (6) d'alimentation en constituants réducteurs alimente des constituants réducteurs en enrichissant un rapport air-carburant d'un mélange air-carburant dans une enceinte de combustion dudit moteur.

4. Appareil de purification des gaz d'échappement selon la revendication 1, dans lequel ledit moyen (3) générant de l'ammoniac comprend un support poreux résistant à la chaleur et un ou plusieurs métaux précieux tels que le palladium (Pd), le platine (Pt), le rhodium (Rh), le ruthénium (Ru) et l'iridium (Ir) portés par ledit support.
